(19) Europäisches Patentamt
European Patent Office
Office européen des brevets

(11) **EP 4 770 184 A1**

(12) **EUROPEAN PATENT APPLICATION**
published in accordance with Art. 153(4) EPC

(43) Date of publication:
**01.07.2026 Bulletin 2026/27**

(21) Application number: **24861969.4**

(22) Date of filing: **03.09.2024**

(51) International Patent Classification (IPC):
**H04W 24/10** (2009.01)      **H04L 5/00** (2006.01)

(52) Cooperative Patent Classification (CPC):
**H04L 5/00; H04W 24/02; H04W 24/10**

(86) International application number:
**PCT/CN2024/116652**

(87) International publication number:
**WO 2025/051126 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.09.2023 CN 202311150468**

(71) Applicant: HUAWEI TECHNOLOGIES CO., LTD.
**Shenzhen 518129 (CN)**

(72) Inventors:
• LIU, Chenchen
  **Shenzhen, Guangdong 518129 (CN)**
• QIAN, Bin
  **Shenzhen, Guangdong 518129 (CN)**
• HUANG, Lei
  **Shenzhen, Guangdong 518129 (CN)**
• YANG, Xun
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57)    This application provides a communication method and apparatus. The method includes: A first communication apparatus sends first information to a second communication apparatus. The first information may include at least one of the following: a first parameter, a second parameter, or a third parameter. The first parameter indicates a feedback manner of a CIR measurement report, the second parameter indicates a reference CIR tap, and the third parameter indicates configuration of a noise threshold. Therefore, in the method, at least one of the first parameter, the second parameter, or the third parameter is added to the first information, to support flexible configuration of a sensing control parameter, and help flexibly feed back the CIR measurement report. This meets requirements of different application scenarios.

```
Sensing initiator                          Sensing responder

        │          301: Send first information        │
        │ ──────────────────────────────────────────> │
        │                                              │
        │                                         302 ╮│
        │                                    ┌─────────┴──┐
        │                                    │ Receive the first │
        │                                    │  information │
        │                                    └─────────────┘
        │                                              │
```

FIG. 3

**Description**

CROSS-REFERENCE TO RELATED APPLICATIONS

This application claims priority to Chinese Patent Application No. 202311150468.4, filed with the China National Intellectual Property Administration on September 6, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

An ultra-wideband (ultra-wideband, UWB) technology is a wireless carrier communication technology in which a non-sinusoidal wave narrow pulse at a nanosecond level to a microsecond level is used for data transmission. Therefore, the ultra-wideband occupies a wide frequency spectrum range. Due to a narrow pulse and extremely low radiation spectrum density, a UWB system has advantages such as a strong multipath resolution capability, low power consumption, and high confidentiality, and therefore can be applied in scenarios such as indoor communication, a high-speed wireless LAN, a home network, a cordless telephone, security detection, location measurement, and radar.
In a sensing scenario, a key sensing manner in the industry is implementing target sensing using a UWB signal. A principle of the UWB technology is to extract information such as a distance, an angle, or a velocity of a target by detecting an echo of the UWB signal from the target, to implement target sensing. For example, when a sensing receiver (sensing receiver) is a receiving end device of the UWB signal, the sensing receiver may transmit a channel impulse response (channel impulse response, CIR) measurement report to a sensing transmitter (sensing transmitter) through an air interface, to feed back a target sensing result. In a CIR window-based CIR feedback mechanism, the sensing receiver may send, to the sensing transmitter based on an indication of a CIR tap (or referred to as a tap) that needs to be fed back, the CIR tap that is in a CIR window and that needs to be fed back, to feed back the target sensing result. Each CIR tap may indicate a sensing result at a specific time granularity in the CIR window.
Currently, when the sensing receiver feeds back the CIR measurement report, a feedback manner of the CIR measurement report is fixed and lacks flexibility, and cannot meet different application scenarios.

SUMMARY

This application provides a communication method and apparatus, to flexibly feed back a CIR measurement report, so as to meet requirements of different application scenarios.
According to a first aspect, this application provides a communication method. The method may be implemented by exchanging data between a plurality of communication apparatuses (for example, a first communication apparatus and a second communication apparatus). For example, the first communication apparatus may be a sensing initiator (or sensing transmitter) or a component (for example, a chip, a chip system, a processor, or a circuit) that can support the sensing initiator (or sensing transmitter) in implementing a function required for the method, and the second communication apparatus may be a sensing responder (or sensing receiver) or a component (for example, a chip, a chip system, a processor, or a circuit) that can support the sensing responder (or sensing receiver) in implementing a function required for the method. Optionally, for example, data exchange is performed between the first communication apparatus and the second communication apparatus to implement the communication method. In the method, the first communication apparatus sends first information to the second communication apparatus. The first information may include at least one of the following: a first parameter, a second parameter, or a third parameter. The first parameter indicates a feedback manner of a CIR measurement report, the second parameter indicates a reference CIR tap, and the third parameter indicates configuration of a noise threshold.
In the method, at least one of the first parameter, the second parameter, or the third parameter is added to (or appended to or configured for) the first information, to support flexible configuration of a sensing control parameter (or referred to as configuration of a sensing session parameter), and help flexibly feed back the CIR measurement report. This can meet requirements of different application scenarios. When the first information includes the first parameter, the feedback manner of the CIR measurement report may be flexibly configured, to support a sensing report feedback and sensing parameter configuration by using an out-of-band narrowband system. When the first information includes the second parameter, the reference CIR tap may be flexibly configured, to support configuration of different reference CIR taps (or may be understood as reference points). When the first information includes the third parameter, the noise threshold may be flexibly configured, to support configuration of different noise thresholds.

According to a second aspect, this application provides a communication method. The method may be implemented by exchanging data between a plurality of communication apparatuses (for example, a first communication apparatus and a second communication apparatus). For example, the first communication apparatus may be a sensing initiator (or sensing transmitter) or a component (for example, a chip, a chip system, a processor, or a circuit) that can support the sensing initiator (or sensing transmitter) in implementing a function required for the method, and the second communication apparatus may be a sensing responder (or sensing receiver) or a component (for example, a chip, a chip system, a processor, or a circuit) that can support the sensing responder (or sensing receiver) in implementing a function required for the method. Optionally, for example, data exchange is performed between the first communication apparatus and the second communication apparatus to implement the communication method. In the method, the second communication apparatus receives first information from the first communication apparatus. The first information may include at least one of the following: a first parameter, a second parameter, or a third parameter. The first parameter indicates a feedback manner of a CIR measurement report, the second parameter indicates a reference CIR tap, and the third parameter indicates configuration of a noise threshold.

For beneficial effect of the method in the second aspect, refer to descriptions of beneficial effect of the method in the first aspect. Details are not described herein again.

In a possible design, when the first information includes the first parameter, the first parameter may indicate that the feedback manner of the CIR measurement report is feeding back the CIR measurement report on a UWB frequency band or feeding back the CIR measurement report by using an out-of-UWB narrowband system.

In the foregoing design, the first parameter is added to the first information, so that the feedback manner (or referred to as a sending manner) of the CIR measurement report is more flexible. This meets different feedback requirements of the second communication apparatus. Compared with an existing feedback manner, the method supports both a sensing report feedback and sensing parameter configuration on the UWB frequency band, and a sensing report feedback and sensing parameter configuration by using the out-of-band narrowband system.

In a possible design, when the first information includes the second parameter, the second parameter may indicate one of the following as the reference CIR tap: a first CIR tap, a second CIR tap, or a third CIR tap. The first CIR tap may be a CIR tap corresponding to an earliest arriving path. When there is one strongest path, the second CIR tap may be a CIR tap corresponding to the strongest path; or when there are a plurality of equal strongest paths, the second CIR tap may be a CIR tap corresponding to a first strongest arriving path in the plurality of equal strongest paths. The third CIR tap is any one of CIR taps other than the first CIR tap and the second CIR tap.

In the foregoing design, the second parameter is added to the first information, to support configuration of different reference points (that is, different CIR taps are used as reference CIR taps). Therefore, configuration of the reference CIR taps is more flexible, to meet configuration requirements of different reference points.

In a possible design, the first information may further include a fourth parameter; when the second parameter indicates that the first CIR tap is used as the reference CIR tap, the fourth parameter may indicate a first offset of a $1^{st}$ CIR tap in a CIR window relative to the first CIR tap, and the first offset is an integer greater than or equal to 0. When the second parameter indicates that the second CIR tap is used as the reference CIR tap, the fourth parameter may indicate a second offset of the $1^{st}$ CIR tap in the CIR window relative to the second CIR tap, and the second offset may be an integer greater than or equal to 0 or the second offset may be an integer less than 0. When the second parameter indicates that the third CIR tap is used as the reference CIR tap, the fourth parameter may indicate a third offset of the $1^{st}$ CIR tap in the CIR window relative to the third CIR tap, and the third offset is an integer greater than 0 or less than 0.

In the foregoing design, under configuration of different reference points, the fourth parameter may be interpreted in different manners, to support configuration of a plurality of reference points. Therefore, configuration of the reference points is more flexible, to meet different application scenarios.

In a possible design, the first information may further include a fifth parameter, and a bitmap mode indicated by the fifth parameter is feeding back the CIR tap based on a customized feedback pattern or feeding back the CIR tap based on a preset feedback pattern. In this way, the feedback of the CIR tap is more flexible, so that the feedback mode of the CIR tap can meet different requirements of the second communication apparatus, and efficiency of feeding back the CIR tap can be improved.

In a possible design, the configuration, of the noise threshold, indicated by the third parameter is: When the bitmap mode indicated by the fifth parameter is feeding back the CIR tap based on the customized feedback pattern, the second communication apparatus may determine an amplitude of the noise threshold based on an amplitude of a CIR tap corresponding to a detected strongest path and a ratio included in the configuration. The ratio indicates a ratio of the amplitude of the CIR tap corresponding to the strongest path to the amplitude of the noise threshold, and a CIR tap whose amplitude is greater than or equal to the amplitude of the noise threshold is included in the CIR measurement report.

In the foregoing design, the third parameter is added to the first information, to support configuration of different noise thresholds. In this way, when the bitmap mode is feeding back the CIR tap based on the customized feedback pattern, only the CIR tap whose amplitude is greater than or equal to the amplitude, calculated by the second communication apparatus, of the noise threshold can be fed back. This can further reduce a number of CIR taps that need to be fed back in the CIR window, and help reduce communication overheads during the feedback of the CIR measurement report.

In a possible design, the amplitude of the noise threshold meets the following form:

$$S = T \times 10^{\left(-\frac{Q}{20}\right)}$$

S indicates the amplitude of the noise threshold, T indicates the amplitude of the CIR tap corresponding to the strongest path detected by the second communication apparatus, and Q indicates the ratio of the amplitude of the CIR tap corresponding to the strongest path to the amplitude of the noise threshold.

In the foregoing design, the second communication apparatus may accurately calculate, according to the foregoing formula for calculating the amplitude of the noise threshold, the amplitude of the noise threshold required for selecting the CIR tap that needs to be fed back, so that the feedback of the CIR tap better meets an actual situation of the second communication apparatus and better meets a CIR feedback requirement of the second communication apparatus. Therefore, feedback overheads of the CIR measurement report can be effectively reduced, and amplitudes of different noise thresholds can be correspondingly configured in different application scenarios.

According to a third aspect, this application provides a possible communication apparatus. Optionally, the communication apparatus may be a communication device (for example, a first communication apparatus or a second communication apparatus) or a component (for example, a chip, a chip system, a processor, or a circuit) that can support the communication device in implementing a function required by a communication method. For example, when the communication apparatus is a chip disposed in the first communication apparatus (or the second communication apparatus), the communication apparatus includes a transceiver and a processor, and does not include a memory. The transceiver exists as an input/output interface, and the input/output interface is used by the chip to implement receiving/sending of the communication apparatus. The input/output interface may include an input interface and/or an output interface. The input interface may implement receiving of the communication apparatus, and the output interface may be configured to implement sending of the communication apparatus. The processor is configured to read and execute a corresponding computer program or instructions, so that a corresponding function of the first communication apparatus (or the second communication apparatus) is implemented. Optionally, when the chip implements the corresponding function of the first communication apparatus (or the second communication apparatus) in communication method embodiments provided in this application, the input/output interface may implement receiving/sending operations performed by the first communication apparatus (or the second communication apparatus) in the communication method embodiments provided in this application, and the processor may implement an operation other than the receiving/sending operations performed by the first communication apparatus (or the second communication apparatus) in the communication method embodiments provided in this application.

In an example, when the communication apparatus is configured to implement a function of the first communication apparatus in the communication method embodiments provided in this application, for beneficial effect, refer to descriptions of the first communication apparatus in the first aspect. Details are not described herein again. The communication apparatus has functions of implementing behavior of the first communication apparatus in a method example in the first aspect. The functions may be implemented by hardware, or may be implemented by hardware executing corresponding software. The hardware or the software includes one or more modules corresponding to the foregoing functions. In a possible design, the communication apparatus includes a communication module (which may also be referred to as a communication unit, a transceiver module, or a transceiver unit, configured to send and receive data) and a processing module (which may also be referred to as a processing unit). The communication module is configured to send first information to a second communication apparatus. The first information includes at least one of the following: a first parameter, a second parameter, or a third parameter. The first parameter indicates a feedback manner of a CIR measurement report, the second parameter indicates a reference CIR tap, and the third parameter indicates configuration of a noise threshold. The processing module is configured to perform corresponding data processing. The modules may perform a corresponding function of the first communication apparatus in the method example in the first aspect. For details, refer to detailed descriptions of the corresponding function of the first communication apparatus in the method example. Details are not described herein again.

In another example, when the communication apparatus is configured to implement a function of the second communication apparatus in the communication method embodiments provided in this application, for beneficial effect, refer to descriptions of the second communication apparatus in the second aspect. Details are not described herein again. The communication apparatus has functions of implementing behavior of the second communication apparatus in a method example in the second aspect. The functions may be implemented by hardware, or may be implemented by hardware executing corresponding software. The hardware or the software includes one or more modules corresponding to the foregoing functions. In a possible design, the communication apparatus includes a communication module and a processing module. The communication module is configured to receive the first information from the first communication apparatus. The first information includes at least one of the following: a first parameter, a second parameter, or a third parameter. The first parameter indicates a feedback manner of a CIR measurement report, the second parameter indicates a reference CIR tap, and the third parameter indicates configuration of a noise threshold. The processing module is configured to perform corresponding data processing. The modules may perform a corresponding function of the second communication apparatus in the method example in the second aspect. For details, refer to detailed descriptions of the corresponding function of the second communication apparatus in the method example. Details are not described herein again.

According to a fourth aspect, this application provides a possible communication apparatus. The communication apparatus may be a communication apparatus (for example, a first communication apparatus or a second communication apparatus) needed for performing the communication method provided in this application, may be a device including the communication apparatus needed for performing the communication method provided in this application, or may be a device having a function needed for implementing the communication method. The communication apparatus may include a transceiver and a processor. Optionally, the communication apparatus may further include a memory. The memory is configured to store a computer program or instructions. The processor is coupled to the memory and the transceiver. When the processor executes the computer program or the instructions, the communication apparatus is enabled to perform the method in the first aspect or the method in the second aspect.

According to a fifth aspect, this application provides a possible communication system. The communication system may include the first communication apparatus, the second communication apparatus, and the like mentioned in the first aspect or the second aspect. For implementation of a related function of the first communication apparatus or the second communication apparatus, refer to related descriptions mentioned in the first aspect or the second aspect. Details are not described herein again.

For example, the communication system may include one or more first communication apparatuses and one or more second communication apparatuses.

According to a sixth aspect, this application provides a computer program product. The computer program product includes a computer program or instructions. When the computer program or the instructions are run on a computer, the computer is enabled to perform the method in the first aspect or the method in the second aspect.

According to a seventh aspect, this application provides a computer-readable storage medium. The computer-readable storage medium stores a computer program or instructions. When the computer program or the instructions are executed by a computer, the computer is enabled to perform the method in the first aspect or the method in the second aspect.

According to an eighth aspect, this application further provides a chip. The chip is coupled to a memory. The chip is configured to read a computer program stored in the memory, to perform the method in the first aspect or the method in the second aspect.

According to a ninth aspect, this application further provides a chip system. The chip system includes a processor, configured to support a computer apparatus in implementing the method in the first aspect or the method in the second aspect. In a possible design, the chip system further includes a memory, and the memory is configured to store a program and data that are necessary for the computer apparatus. The chip system may include a chip, or may include a chip and another discrete component.

In this application, based on the implementations provided in the foregoing aspects, the implementations may be further combined to provide more implementations.

BRIEF DESCRIPTION OF DRAWINGS

FIG. 1a is a diagram of an example of a communication system with a star topology structure according to an embodiment of this application;
FIG. 1b is a diagram of an example of a communication system with a point-to-point topology structure according to an embodiment of this application;
FIG. 2 is a diagram of an example of a CIR window according to an embodiment of this application;
FIG. 3 is a schematic flowchart of an example of a communication method according to an embodiment of this application;
FIG. 4 is a diagram of an example of a structure of a possible communication apparatus according to an embodiment of this application; and
FIG. 5 is a diagram of an example of a structure of another possible communication apparatus according to an embodiment of this application.

DESCRIPTION OF EMBODIMENTS

Technical solutions provided in embodiments of this application are applicable to a UWB technology-based wireless personal area network (wireless personal area network, WPAN). For example, a communication method provided in embodiments of this application is applicable to the Institute of Electrical and Electronics Engineers (Institute of Electrical and Electronics Engineers, IEEE) 802.15 series protocols, for example, the 802.15.4a protocol, the 802.15.4z protocol, the 802.15.4ab protocol, or a future generation of UWB WPAN standard. Examples are not enumerated herein. The communication method provided in embodiments of this application may be further applied to various communication systems, for example, an Internet of things (Internet of things, IoT) system, vehicle to X (vehicle to X, V2X), and a narrowband Internet of things (narrowband Internet of things, NB-IoT) system. For example, the communication method provided in embodiments of this application may be applied to devices in a vehicle to X system, and Internet of things nodes and sensors in the Internet of things system, or applied to smart cameras, smart remote controls, and smart water or electricity meters in a smart home, and sensors in a smart city. The communication method provided in embodiments of this application is further applicable to an LTE frequency division duplex (frequency division duplex, FDD) system, an LTE time division duplex (time division duplex, TDD) system, a worldwide interoperability for microwave access (worldwide interoperability for microwave access, WiMAX) communication system, a long term evolution (long term evolution, LTE) system, a 5th generation (5th generation, 5G) communication system, a 6th generation (6th generation, 6G) communication system, or the like. In addition, the communication method provided in embodiments of this application may be further applied to a wireless local area network system that supports IEEE 802.11ax (mobile hotspot (Wi-Fi) 6)/802.11be (Wi-Fi 7)/802.11bn (Wi-Fi 8)/Wi-Fi (artificial intelligence, AI)/millimeter wave/UWB, or sensing.

Before the technical solutions provided in this application are described, some terms in this application are first explained and described, to facilitate understanding by a person skilled in the art.

(1) Sensing may also be referred to as sensing measurement or radio sensing, means that a transmitter and a receiver transmit a signal to discover a target or determine a target status. UWB sensing means that a station (station, STA) with a UWB signal sensing capability uses a received UWB signal to detect a feature of a target in a given environment. For example, the feature of the target includes one or more of a range, a velocity, an angle, a motion, existence or proximity, and a gesture. The target includes one or more of an object, a person, an animal, and the like. The environment includes one or more of a room, a house, a vehicle, an enterprise, and the like.

For example, the transmitter may send a UWB signal used for sensing measurement to the receiver, and the receiver may measure the signal, to obtain a channel estimation result, for example, a channel impulse response (channel impulse response, CIR). The receiver may perform sensing based on the CIR. Alternatively, the receiver may send the channel estimation result to the transmitter, and the transmitter performs target sensing or target status sensing based on the channel estimation result. For example, the receiver or the transmitter may process the CIR, to determine whether a moving object exists in the environment.

During specific implementation, sensing signals may be sent one by one in a form of a data packet, and therefore may also be referred to as sensing packets (sensing packet, SP).

In some embodiments, a sensing signal sent on a frequency band within a time period may be referred to as a sensing fragment (sensing fragment, SF), and each sensing fragment may include one or more sensing packets. It may be understood that when a number of sensing packets in the sensing fragment is determined, the sensing packet may be replaced with the sensing fragment.

In a sensing process, devices participating in sensing mainly include a sensing initiator, a sensing responder, a sensing transmitter, and a sensing receiver. For details, refer to descriptions in (2) to (5) in the following.

(2) The sensing initiator (sensing initiator) is also referred to as an initiator, and is a device that initiates a sensing procedure.

(3) The sensing responder (sensing responder) is also referred to as a sensing responder, a responder, a responder, or a responder, and is a device that responds to sensing initiated by the sensing initiator and participates in sensing.

(4) The sensing transmitter is a device that sends a sensing signal, and is also referred to as a transmitter. The sensing signal may be a signal used for sensing measurement.

(5) The sensing receiver is a device that receives the sensing signal, and is also referred to as a receiver. The sensing receiver may measure the sensing signal.

During specific implementation, the sensing initiator may serve as the transmitter, and the sensing responder may serve as the receiver. Alternatively, the sensing initiator may serve as the receiver, and the sensing responder may serve as the transmitter.

For example, the sensing initiator may be a network device or a terminal device, and the sensing responder may be a network device or a terminal device. The network device may include a radio access network (radio access network, RAN) device, a core network (core network, CN) device, and the like. Optionally, the terminal device may be connected to the RAN device in a wireless manner, and the RAN device may be connected to the CN device in a wireless or wired manner. The CN device and the RAN device may be different independent physical devices, or functions of the CN device and logical functions of the RAN device may be integrated into a same physical device, or some functions of the core network device and some functions of the RAN device may be integrated into one physical device. Terminal devices may be connected to each other and RAN devices may be connected to each other in a wired or wireless manner.

Optionally, the RAN device sometimes may also be referred to as an access network device, a RAN entity, a RAN node, an access node, or the like, and form a part of the communication system, to help the terminal device implement radio access. A plurality of RAN devices in the communication system may be nodes of a same type, or may be nodes of different types. The RAN device in embodiments of this application may be a base station (base station), an evolved NodeB (evolved NodeB, eNodeB), a transmission reception point (transmission reception point, TRP), a transmission point (transmission point, TP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system or a vehicle to X system, or the like.

Optionally, the terminal device is a device that has a function of receiving/sending a signal on a user side, and may provide service functions such as a video, a voice, and data connectivity for a user. In addition, the terminal device may also be referred to as a terminal, user equipment (user equipment, UE), an access terminal device, a vehicle-mounted terminal, an industrial control terminal, a UE unit, a UE station, a mobile console, a mobile station (mobile station, MS), a mobile terminal (mobile terminal, MT), a remote station, a remote terminal device, a mobile device, a UE terminal device, a terminal device, a wireless communication device, a UE agent, a UE apparatus, or the like.

For example, the terminal device may be a mobile phone (mobile phone), a tablet computer (Pad), a subscriber unit (subscriber unit), a cellular phone (cellular phone), a smartphone (smartphone), a wireless data card, a personal digital assistant (Personal Digital Assistant, PDA) computer, a wireless modem (modem), a handheld device (handset), a laptop computer (laptop computer), a computer with a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, a vehicle, an uncrewed aerial vehicle, a helicopter, an airplane, a factory machine/device, a machine type communication (Machine Type Communication, MTC) terminal, a ship, or a robot. Neither a specific technology nor a specific device form used by the terminal device is limited in embodiments of this application.

Optionally, the terminal device and the base station may be deployed on land, where the deployment includes indoor or outdoor, handheld, or wearable or vehicle-mounted deployment; may be deployed on water (for example, on a ship); or may be deployed in air (for example, on an airplane, a balloon, or a satellite). In embodiments of this application, positions of the terminal device and the base station may be fixed or mobile. This is not limited in embodiments of this application.

The following describes in detail embodiments of this application with reference to accompanying drawings.

The communication method provided in embodiments of this application may operate in a communication system with a star topology structure, a point-to-point topology structure, or a mesh topology structure.

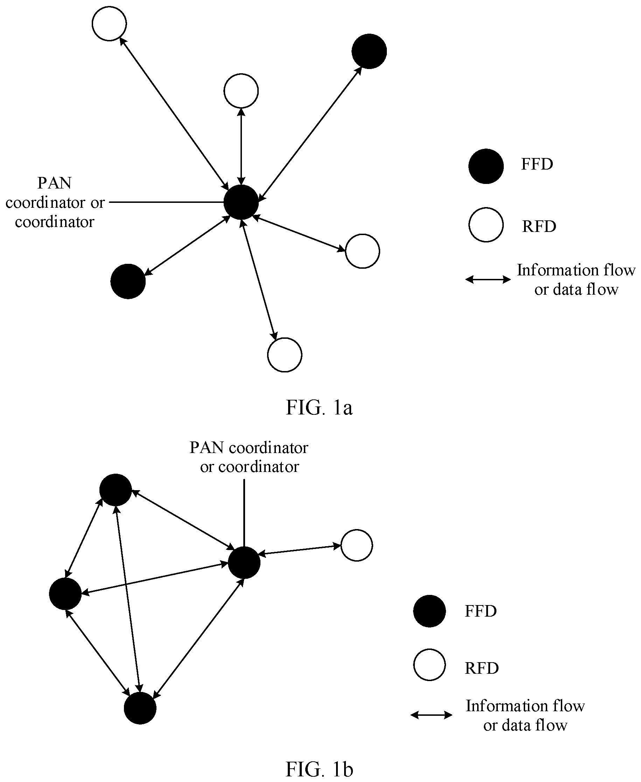

FIG. 1a is a diagram of an example of a communication system with a star topology structure according to an embodiment of this application. As shown in FIG. 1a, in a star topology, data communication is performed between a central control node (for example, a personal area network (personal area network, PAN) coordinator or a coordinator) and one or more other devices. For example, the central control node may include but is not limited to a communication server, a router, a switch, a bridge, a computer, a smartphone, a smart home device, or a tag device.

FIG. 1b is a diagram of an example of a communication system with a point-to-point topology structure according to an embodiment of this application. As shown in FIG. 1b, in a point-to-point topology, data communication is performed between different devices. It may be understood that the point-to-point topology may be considered as a special mesh topology. In the mesh topology structure, data communication may be performed between any two devices.

Optionally, in FIG. 1a or FIG. 1b, a black node is a full function device (full function device, FFD), and a white node is a reduced function device (reduced function device, RFD). For example, in a UWB system, the FFD may be an anchor device, or a tag device with a strong computing capability, for example, a UWB tag carried on a smartphone. When the RFD is a tag device, the RFD has only some computing capabilities. In a possible implementation, the FFD device may serve as a PAN coordinator or a coordinator, but the RFD cannot serve as a PAN coordinator or a coordinator.

A UWB technology is a wireless carrier communication technology, which uses nanosecond-level narrow pulses to transmit data. The narrow pulses occupy a wide spectrum range and have extremely low radiation spectrum density. The UWB system has advantages such as high multi-path resolution, low power consumption, and high confidentiality. As the UWB technology is applied in the civil field, ultra-wideband wireless communication has become one of popular physical layer technologies for short-range and high-speed wireless networks. Currently, the IEEE association has incorporated the UWB into the IEEE 802 series wireless standards of the IEEE association, and the UWB-based WPAN standard IEEE 802.15.4a and the evolved version IEEE 802.15.4z of IEEE 802.15.4a have been released. In the communication, ranging, and sensing features, the UWB focuses more on ranging and sensing capabilities, and a single waveform may be used to implement sensing and ranging.

When the UWB technology is applied to a sensing scenario, and a sensing responder is a receiving device of a UWB signal, the sensing responder needs to transmit a measurement result of a CIR to a sensing initiator through an air interface, to feed back a sensing result. In a CIR window-based (or referred to as feedback window-based) CIR feedback mechanism, the sensing responder may send, to the sensing initiator based on an indication of a CIR tap that needs to be fed back, the CIR tap that is in a CIR window and that needs to be fed back, to feed back the sensing result. Each CIR tap may indicate a sensing result at a specific time granularity in the CIR window. The indication may indicate the CIR tap that needs to be fed back. Therefore, the sensing responder may send only the CIR tap that needs to be fed back, and does not need to send a CIR tap other than the CIR tap that needs to be fed back, to reduce overheads. It may be understood that, a time domain granularity of each CIR tap is, for example, 1 nanosecond (ns). The CIR window may include a maximum of 32, 64, 128, or 256 CIR taps. In other words, a length of the CIR window may be 32 ns, 64 ns, 128 ns, or 256 ns.

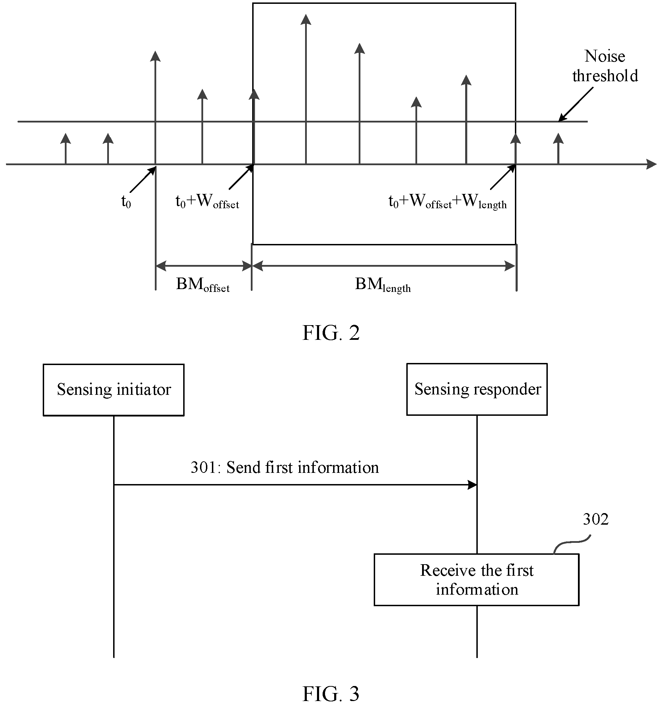

FIG. 2 is a diagram of a CIR window according to an embodiment of this application. As shown in FIG. 2, $t_0$ indicates a location of an earliest detected tap (earliest detected tap) as a reference CIR tap (tap), namely, a location of a CIR tap corresponding to an earliest arriving path. The sensing initiator may indicate a location of the CIR window based on $BM_{offset}$ and $BM_{length}$.

$BM_{offset}$ indicates an offset of a 1st CIR tap (or referred to as a 1st tap) in the CIR window relative to the reference CIR tap (or referred to as a reference tap). For example, $BM_{offset}$ may indicate a number $W_{offset}$ of CIR taps between a location of the 1st CIR tap in the CIR window and the location of the reference CIR tap, and the location of the 1st CIR tap in the CIR window may be denoted as $(t_0+W_{offset})$.

$BM_{length}$ indicates a length of the CIR window. For example, $BM_{length}$ may indicate a number $W_{length}$ of CIR taps between an end location of the CIR window and a start location of the CIR window. For example, a value of $BM_{length}$ is 32, 64, 128, or 256. Therefore, the start location and the end location of the CIR window are respectively $(t_0+W_{offset})$ and $(t_0+W_{offset}+W_{length})$, where $W_{offset}$ is the number of CIR taps indicated by $BM_{offset}$, and $W_{length}$ is the number of CIR taps indicated by $BM_{length}$. In this embodiment of this application, "number" may also be replaced with "quantity".

In the CIR window-based CIR feedback mechanism, the sensing initiator may indicate, based on a CIR report parameters configuration (CIR report parameters config) field, whether each CIR tap is a CIR tap that needs to be fed back by the sensing receiver. For example, the CIR window includes 256 CIR taps. The sensing initiator may indicate, based on information (for example, a bitmap (bitmap)) with a length of 256 bits, whether each CIR tap needs to be fed back, and indication overheads are excessively high. Each bit corresponds to one CIR tap. For example, when a value of any bit is 1 (or may be 0), it indicates that a corresponding CIR tap needs to be fed back. Correspondingly, the sensing responder sends, to the sensing initiator, the CIR tap that needs to be fed back.

Currently, $BM_{offset}$ and $BM_{length}$ are indicated by the sensing transmitter based on the CIR measurement report parameters configuration (CIR report parameters config) field. The CIR measurement report parameters configuration field may be carried in an application control (Application Control, AC) information element (information element, IE). The AC IE is used by a controller to send session configuration information, and the session configuration information may include a common control parameter used by each application and an application-specific control parameter. The AC IE may have control parameters for a plurality of types of applications, to support the applications in a sensing session.

For a sensing application, an AC IE corresponding to a sensing control field is used to configure a sensing control parameter. For a format of the AC IE corresponding to the sensing control field, refer to Table 1. Optionally, the sensing session usually includes one or more sensing instances. The sensing instance usually includes a sensing control phase (Sensing Control Phase), a sensing phase (Sensing Phase), and an optional sensing measurement report phase (Sensing Measurement Report Phase). Configuration of the sensing control parameter (or referred to as a sensing session parameter) usually occurs in the sensing control phase (Sensing Control Phase), and the sensing control parameter configured in the sensing control phase may be updated. The sensing initiator or the sensing responder starts the sensing phase by transmitting a sensing physical layer protocol data unit (PHY Protocol Data Unit, PPDU) type agreed upon in the sensing control phase (or a sensing session setup phase). The sensing measurement report phase may be after transmission of a sensing PPDU.

Table 1

| Bit (bit) index | 0 | 1 | 2 | 3 to 7 | Variable (variable) | Variable | Variable |
|---|---|---|---|---|---|---|---|
| Field name | Common sensing control present (Common Sensing Control Present) | CIR report parameters present (CIR Report Parameters Present) | Frequency stitching parameters present (Frequency Stitching Parameters Present) | Reserved (Reserved) | Common sensing control configuration (Common Sensing Control Config) | CIR report parameters configuration (CIR Report Parameters Config) | Frequency stitching parameters configuration (Frequency Stitching Parameters Config) |

The common sensing control present field indicates whether the common sensing control configuration field is present, the CIR report parameters present field indicates whether the CIR report parameters configuration field is present, and the frequency stitching parameters present field indicates whether the frequency stitching parameters configuration field is present.

When the common sensing control configuration field is present in a parameter field included in the AC IE, for a format of the common sensing control configuration field, refer to Table 2.

Table 2

| Bit index | 0 and 1 | 2 | 3 and 4 | 5 to 7 |
|---|---|---|---|---|
| Field name | Sensing mode (Sensing mode) | Responder role (Responder role) | Sensing packet format (Sensing Packet format) | Reserved (Reserved) |

The sensing mode indicates a sensing measurement mode, for example, monostatic (Monostatic) sensing, bi-static (Bi-static) sensing, multi-static (Multi-static) sensing, or sensing by proxy (Sensing by Proxy). The responder role indicates whether the responder is a transmitter or a receiver, and the sensing packet format indicates a structure type of the PPDU.

When the CIR report parameters configuration field is present in the parameter field included in the AC IE, for a format of the CIR report parameters configuration field, refer to Table 3.

Table 3

| Bit index | Field name |
|---|---|
| 0 and 1 | CIR in-phase and quadrature (in-phase and quadrature, I/Q) number of bits (CIR I/Q number of bits) |
| 2 and 3 | Bitmap mode (Bitmap mode) |
| 4 and 5 | Bitmap length (Bitmap length)/Bitmap sub-window length (sub-window length) |
| 6 | Process CIR report for range (Process CIR report for Range) |
| 7 | Process CIR report for velocity (Process CIR report for Velocity) |
| 8 | Process CIR report for azimuth angle of arrival (azimuth angle of arrival, AOA) measurement (Process CIR report for AOA measurement) |
| 9 to 18 | Bitmap offset (Bitmap offset) |
| 19 to 23 | Bitmap gap (Bitmap Gap) |
| 24 | Compression (Compression) |
| 4 octets to 64 octets (octets) | Bitmap (Bitmap) |

The CIR in-phase and quadrature number of bits field indicates a number of quantization bits used for quantizing the CIR. The bitmap mode field indicates whether a bitmap fed back by the CIR is set by the sensing initiator or the sensing responder, and whether the bitmap is selected from a preset bitmap set or is a customized bitmap. When the bitmap fed back by the CIR is specified by the sensing initiator from the preset bitmap set, the bitmap length/bitmap sub-window length field indicates a sub-window length of a preset bitmap; otherwise, the bitmap length/bitmap sub-window length field indicates a bitmap length. The process CIR report for range field, the process CIR report for velocity field, and the process CIR report for azimuth angle of arrival measurement field indicate whether CIR information needs to be further processed to obtain information about a distance, a velocity, and an angle corresponding to sensing measurement. The bitmap offset field indicates the offset of the 1st tap in the CIR window relative to the reference tap. The bitmap gap field is present only when the bitmap fed back by the CIR is specified by the sensing initiator from the preset bitmap set, and indicates a gap between two sub-windows. The compression field indicates whether to compress the CIR information. The bitmap field indicates specific bitmap information only when the sensing initiator customizes a bitmap for a sensing feedback.

However, the existing CIR window-based CIR feedback mechanism supports only the CIR tap corresponding to the earliest arriving path as the reference CIR tap. However, in some application scenarios, another CIR tap needs to be used as the reference CIR tap (for example, a CIR tap corresponding to a strongest path is used as the reference CIR tap), and the AC IE corresponding to the existing sensing control field does not support this setting. Further, when the CIR tap corresponding to the earliest arriving path is used as the reference CIR tap, the location of the CIR tap corresponding to the earliest arriving path is related to configuration of a noise threshold (or referred to as a noise threshold). The CIR tap corresponding to the earliest arriving path is a 1st CIR tap whose amplitude is greater than the noise threshold. However, different noise thresholds need to be set in different application scenarios, to balance CIR feedback precision and feedback overheads. However, the AC IE corresponding to the existing sensing control field does not support the configuration of the noise threshold. In addition, when a narrowband system (for example, a Bluetooth system) collaborates with the UWB system, parameter configuration of sensing measurement and a sensing result feedback may also be transmitted by using the narrowband system. However, the AC IE corresponding to the existing sensing control field does not support sensing configuration and a sensing report feedback of the narrowband system. In view of this, this application provides a communication method, to flexibly feed back a CIR measurement report, so as to meet different application scenarios.

The following describes in detail a specific implementation of the communication method in embodiments of this application based on the architecture of the communication system shown in FIG. 1a or FIG. 1b.

FIG. 3 is a schematic flowchart of an example of a communication method according to an embodiment of this application. The method is applicable to the architecture of the communication system shown in FIG. 1a or FIG. 1b. A procedure of the method may be implemented by exchanging data between a plurality of communication apparatuses (for example, a first communication apparatus and a second communication apparatus). For example, the first communication apparatus may be a sensing initiator (or sensing transmitter) or a component (for example, a chip, a chip system, a processor, or a circuit) that can support the sensing initiator (or sensing transmitter) in implementing a function required for the method, and the second communication apparatus may be a sensing responder (or sensing receiver) or a component (for example, a chip, a chip system, a processor, or a circuit) that can support the sensing responder (or sensing receiver) in implementing a function required for the method. To facilitate description of the technical solutions provided in embodiments of this application, the following describes, by using an example in which the first communication apparatus is the sensing initiator and the second communication apparatus is the sensing responder, the procedure of implementing the communication method by exchanging data between the first communication apparatus and the second communication apparatus. As shown in FIG. 3, the method includes the following steps.

Step 301: The sensing initiator sends first information to the sensing responder.

Step 302: The sensing responder receives the first information from the sensing initiator.

Optionally, the first information may include (or may indicate) related parameter configuration of a CIR measurement report. For example, the first information may be a CIR report parameters configuration field, or may be an AC IE in which the CIR report parameters configuration field is located.

For example, the first information may include one or more of a first parameter, a second parameter, or a third parameter. The first parameter (for example, an out of band (Out of Band, OOB) subfield) indicates a feedback manner of the CIR measurement report, the second parameter (for example, a reference CIR tap (Reference Tap) subfield) indicates a reference CIR tap, and the third parameter (for example, a noise threshold (Threshold) subfield) indicates configuration (or related information) of a noise threshold. Optionally, the first information may further include a fourth parameter (for example, a bitmap offset (Bitmap offset) subfield), a fifth parameter (for example, a bitmap mode (Bitmap mode) subfield), and the like.

In embodiments of this application, more flexible configuration of a sensing control parameter may be supported by adding one or more subfields to the CIR report parameters configuration field included in the AC IE corresponding to a sensing control field, to flexibly feed back the CIR measurement report, so as to meet different application scenarios. For example, one or more of the first parameter (for example, the OOB subfield), the second parameter (for example, the Reference Tap subfield), or the third parameter (for example, the Threshold subfield) are added to the CIR report parameters configuration field. For example, for a format of the CIR report parameters configuration field to which the related subfield is added, refer to Table 4.

Table 4

| Bit index | Field name |
|---|---|
| 0 and 1 | CIR in-phase and quadrature (in-phase and quadrature, I/Q) number of bits (CIR I/Q number of bits) |
| 2 and 3 | Bitmap mode (Bitmap mode) |
| 4 and 5 | Bitmap length (Bitmap length)/Bitmap sub-window length (sub-window length) |
| 6 | Process CIR report for range (Process CIR report for Range) |
| 7 | Process CIR report for velocity (Process CIR report for Velocity) |
| 8 | Process CIR report for azimuth angle of arrival (azimuth angle of arrival, AOA) measurement (Process CIR report for AOA measurement) |
| 9 to 18 | Bitmap offset (Bitmap offset) |
| 19 to 23 | Bitmap gap (Bitmap Gap) |
| 24 | Compression (Compression) |
| 25 | Out of band (Out of Band) |
| 26 and 27 | Reference CIR tap (Reference Tap) |
| 28 to 34 | Noise threshold (Threshold) |
| 5 octets to 64 octets (octets) | Bitmap (Bitmap) |

The following describes the first information based on Table 4 by using the following several possible implementations.

Manner 1: When the first information includes the first parameter, the first parameter indicates the feedback manner of the CIR measurement report in a CIR window-based CIR feedback solution. For example, the first parameter may indicate that the feedback manner of the CIR measurement report is feeding back the CIR measurement report on a UWB frequency band. For another example, the first parameter may indicate that the feedback manner of the CIR measurement report is feeding back the CIR measurement report by using an out-of-UWB narrowband system (for example, a Bluetooth system).

For example, the first parameter is the OOB subfield. The OOB subfield occupies a length of 1 bit, and the OOB subfield indicates the feedback manner of the CIR measurement report. When OOB=0, the OOB subfield indicates that the CIR measurement report is fed back on the UWB frequency band. When OOB=1, the OOB subfield indicates that the CIR measurement report is fed back by using the out-of-UWB narrowband system. Therefore, the method can support a sensing report feedback and sensing parameter configuration by using the out-of-band narrowband system.

Manner 2: When the first information includes the second parameter, the second parameter may indicate the reference CIR tap in the CIR window-based CIR feedback solution. For example, the second parameter may indicate that a first CIR tap is used as the reference CIR tap. The first CIR tap is a CIR tap corresponding to an earliest arriving path. For another example, the second parameter may indicate that a second CIR tap is used as the reference CIR tap. Optionally, when there is one strongest path, the second CIR tap is a CIR tap corresponding to the strongest path; or when there are a plurality of equal strongest paths, the second CIR tap is a CIR tap corresponding to a first strongest arriving path in the plurality of equal strongest paths. For still another example, the second parameter may indicate that a third CIR tap is used as the reference CIR tap. The third CIR tap is any one of CIR taps other than the first CIR tap and the second CIR tap.

When the first information includes the second parameter, the first information may further include the fourth parameter (for example, the Bitmap offset subfield). When the second parameter indicates that the first CIR tap is used as the reference CIR tap, the fourth parameter indicates a first offset of a 1st CIR tap in a CIR window relative to the first CIR tap. The first offset is an integer greater than or equal to 0. In this case, all CIR taps other than the first CIR tap in the CIR window arrive later than the first CIR tap.

When the second parameter indicates that the second CIR tap is used as the reference CIR tap, the fourth parameter indicates a second offset of the 1st CIR tap in the CIR window relative to the second CIR tap. The 1st CIR tap in the CIR window may arrive earlier than the second CIR tap, or may arrive later than the second CIR tap. In this case, the second offset is a positive or negative integer. For example, when the second offset is an integer greater than 0, the fourth parameter indicates an offset by which the 1st CIR tap in the CIR window is later than the second CIR tap. For another example, when the second offset is an integer less than 0, the fourth parameter indicates an offset by which the 1st CIR tap

in the CIR window is earlier than the second CIR tap.

When the second parameter indicates that the third CIR tap is used as the reference CIR tap, the fourth parameter indicates a third offset of the 1st CIR tap in the CIR window relative to the third CIR tap. The 1st CIR tap in the CIR window may arrive earlier than the third CIR tap, or may arrive later than the third CIR tap. In this case, the third offset is a positive or negative integer. For example, when the third offset is an integer greater than 0, the fourth parameter indicates an offset by which the 1st CIR tap in the CIR window is later than the third CIR tap. For another example, when the third offset is an integer less than 0, the fourth parameter indicates an offset by which the 1st CIR tap in the CIR window is earlier than the third CIR tap. Therefore, the method can support configuration of different reference CIR taps (that is, configuration of different reference points). In addition, under the configuration of the different reference points, the fourth parameter subfield is interpreted in different manners, to support configuration of a plurality of reference points.

For example, the second parameter is the Reference Tap subfield, and the fourth parameter is the Bitmap offset subfield. The Reference Tap subfield occupies a length of 1 bit or 2 bits, and the Reference Tap subfield indicates a location of the reference CIR tap in the CIR window-based CIR feedback solution. When Reference Tap=0, the Reference Tap subfield indicates that the CIR tap corresponding to the earliest arriving path is used as the reference CIR tap, and a location of the CIR tap corresponding to the earliest arriving path is the location of the reference CIR tap. In this case, a field value of the Bitmap offset subfield is a non-negative integer, and the field value of the Bitmap offset subfield indicates an offset of the 1st CIR tap in the CIR window relative to the CIR tap corresponding to the earliest arriving path. Certainly, all CIR taps other than the CIR tap corresponding to the earliest arriving path in the CIR window arrive later than the CIR tap corresponding to the earliest arriving path.

When Reference Tap=1, in a possible implementation, the Reference Tap subfield may indicate that a CIR tap corresponding to a strongest path is used as the reference CIR tap when there is one strongest path, and a location of the CIR tap corresponding to the strongest path is the location of the reference CIR tap. The 1st CIR tap in the CIR window may arrive earlier than the CIR tap corresponding to the strongest path, or may arrive later than the CIR tap corresponding to the strongest path. In this case, the field value of the Bitmap offset subfield is a positive or negative integer. For example, when the field value of the Bitmap offset subfield is an integer greater than 0, the field value of the Bitmap offset subfield indicates an offset by which the 1st CIR tap in the CIR window is later than the CIR tap corresponding to the strongest path. For another example, when the field value of the Bitmap offset subfield is an integer less than 0, the field value of the Bitmap offset subfield indicates an offset by which the 1st CIR tap in the CIR window is earlier than the CIR tap corresponding to the strongest path.

In another possible implementation, the Reference Tap subfield may indicate that a CIR tap corresponding to a first strongest arriving path in a plurality of equal strongest paths is used as the reference CIR tap when there are a plurality of equal strongest paths, and a location of the CIR tap corresponding to the first strongest arriving path is the location of the reference CIR tap. The 1st CIR tap in the CIR window may arrive earlier than the CIR tap corresponding to the first strongest arriving path, or may arrive later than the CIR tap corresponding to the first strongest arriving path. In this case, the field value of the Bitmap offset subfield is a positive or negative integer. For example, when the field value of the Bitmap offset subfield is an integer greater than 0, the field value of the Bitmap offset subfield indicates an offset by which the 1st CIR tap in the CIR window is later than the CIR tap corresponding to the first strongest arriving path. For another example, when the field value of the Bitmap offset subfield is an integer less than 0, the field value of the Bitmap offset subfield indicates an offset by which the 1st CIR tap in the CIR window is earlier than the CIR tap corresponding to the first strongest arriving path.

When a field value of the Reference Tap subfield is indicated by another value, the Reference Tap subfield may indicate that a CIR tap (or a specific CIR tap) in CIR raps other than the CIR tap corresponding to the earliest arriving path and the CIR tap corresponding to the strongest path is used as the reference CIR tap, and a location of the CIR tap (or the specific CIR tap) is the location of the reference CIR tap. The 1st CIR tap in the CIR window may arrive earlier than the CIR tap (or the specific CIR tap), or may arrive later than the CIR tap (or the specific CIR tap). In this case, the field value of the Bitmap offset subfield is a positive or negative integer. For example, when the field value of the Bitmap offset subfield is an integer greater than 0, the field value of the Bitmap offset subfield indicates an offset by which the 1st CIR tap in the CIR window is later than the CIR tap (or the specific CIR tap). For another example, when the field value of the Bitmap offset subfield is an integer less than 0, the field value of the Bitmap offset subfield indicates an offset by which the 1st CIR tap in the CIR window is earlier than the CIR tap (or the specific CIR tap).

Manner 3: When the first information includes the third parameter, the third parameter indicates the configuration of the noise threshold in the CIR window-based CIR feedback solution.

Optionally, the first information may further include the fifth parameter. For example, the fifth parameter (for example, Bitmap mode) indicates that the bitmap mode is feeding back the CIR tap based on a customized feedback pattern. For another example, the fifth parameter indicates that the bitmap mode is feeding back the CIR tap based on a preset feedback pattern.

For example, the fifth parameter is the Bitmap mode subfield. When Bitmap mode=0, the Bitmap mode subfield indicates the sensing responder to feed back the CIR tap based on the preset feedback pattern (feedback pattern), or indicates the sensing responder to determine, based on the preset feedback pattern, the CIR tap that needs to be fed back.

Optionally, the feedback pattern may also be referred to as a feedback pattern, a CIR pattern, or a CIR feedback pattern.

When Bitmap mode=0, an additional field may indicate an index of the feedback pattern, so that one specified feedback pattern is indicated from a plurality of preset feedback patterns, and the sensing responder can determine, based on the specified feedback pattern, the CIR tap that needs to be fed back. When the sensing responder performs CIR feedback, the sensing responder may feed back a CIR tap corresponding to the specified feedback pattern to the sensing initiator based on the specified feedback pattern in the preset feedback patterns.

When Bitmap mode=1, the Bitmap mode subfield indicates the sensing responder to determine, based on the customized feedback pattern, the CIR tap that needs to be fed back. When Bitmap mode=1, the bitmap length field may indicate a length of the CIR window.

In a possible implementation, the third parameter indicates that the configuration of the noise threshold is: When the bitmap mode indicated by the fifth parameter is feeding back the CIR tap based on the customized feedback pattern, the second communication apparatus (for example, the sensing responder) determines an amplitude of the noise threshold based on an amplitude of a CIR tap corresponding to a strongest path detected by the second communication apparatus and a ratio included in the configuration. The ratio (for example, the ratio is 5:1, 10:1, or another ratio) indicates a ratio of the amplitude of the CIR tap corresponding to the strongest path to the amplitude of the noise threshold, and a unit is dB. After determining the amplitude of the noise threshold, the second communication apparatus may select, from a plurality of detected CIR taps, at least one CIR tap whose amplitude is greater than or equal to the amplitude of the noise threshold. Then, the second communication apparatus may generate a CIR measurement report based on the at least one CIR tap whose amplitude is greater than or equal to the amplitude of the noise threshold, and may feed back the CIR measurement report to the first communication apparatus (for example, the sensing initiator). Therefore, overheads can be further reduced, and different amplitudes of noise thresholds can be configured for different application scenarios, to balance CIR feedback overheads and CIR feedback precision. The CIR measurement report includes the at least one CIR tap whose amplitude is greater than or equal to the amplitude of the noise threshold.

For example, when the second communication apparatus determines the amplitude of the noise threshold based on Q, the following form is met:

$$S = T \times 10^{\left(-\frac{Q}{20}\right)}$$

S indicates the amplitude of the noise threshold, T indicates the amplitude of the CIR tap corresponding to the strongest path detected by the second communication apparatus (for example, the sensing responder), and Q indicates the ratio.

For example, the third parameter is the noise threshold Threshold subfield, the fifth parameter is the Bitmap mode subfield, the first communication apparatus is the sensing initiator, the second communication apparatus is the sensing responder, and the ratio is 10:1. The Threshold subfield may indicate that the configuration of the noise threshold Threshold is that the sensing responder determines the amplitude of Threshold based on the amplitude of the CIR tap corresponding to the strongest path detected by the sensing responder and the ratio included in the Threshold subfield when Bitmap mode=1. For example, there are two sensing responders: a sensing responder A and a sensing responder B. It is assumed that the sensing responder A obtains five CIR taps through measurement: a CIR tap A1, a CIR tap A2, a CIR tap A3, a CIR tap A4, and a CIR tap A5. An amplitude of the CIR tap A1 is 1, an amplitude of the CIR tap A2 is 1.5, an amplitude of the CIR tap A3 is 5, an amplitude of the CIR tap A4 is 3, and an amplitude of the CIR tap A5 is 2. The sensing responder A may determine, from the five detected CIR taps, that a CIR tap with a largest amplitude is the CIR tap A3, that is, the CIR tap A3 is the CIR tap corresponding to the strongest path. Then, the sensing responder A may determine, based on the amplitude 5 of the CIR tap A3 and the ratio 10:1, that the amplitude of Threshold is 1.58. Then, because the amplitude of the CIR tap A1 is 1 and is less than 1.58, the amplitude of the CIR tap A2 is 1.5 and is less than 1.58, the amplitude of the CIR tap A3 is 5 and is greater than 1.58, the amplitude of the CIR tap A4 is 3 and is greater than 1.58, and the amplitude of the CIR tap A5 is 2 and is greater than 1.58, the sensing responder A may select the CIR tap A3, the CIR tap A4, and the CIR tap A5 to generate the CIR measurement report, and feed back the CIR measurement report to the sensing initiator.

It is assumed that the sensing responder B also obtains five CIR taps through measurement: a CIR tap B1, a CIR tap B2, a CIR tap B3, a CIR tap B4, and a CIR tap B5. An amplitude of the CIR tap B1 is 2, an amplitude of the CIR tap B2 is 8, an amplitude of the CIR tap B3 is 5, an amplitude of the CIR tap B4 is 1.6, and an amplitude of the CIR tap B5 is 2.5. The sensing responder B may determine, from the five detected CIR taps, that a CIR tap with a largest amplitude is the CIR tap B2, that is, the CIR tap B2 is the CIR tap corresponding to the strongest path. Then, the sensing responder B may determine, based on the amplitude 8 of the CIR tap B2 and the ratio 10:1, that the amplitude of Threshold is 2.53. Then, because the amplitude of the CIR tap B1 is 2 and is less than 2.53, the amplitude of the CIR tap B2 is 8 and is greater than 2.53, the amplitude of the CIR tap B3 is 5 and is greater than 2.53, the amplitude of the CIR tap B4 is 1.6 and is less than 2.53, and the amplitude of the CIR tap B5 is 2.5 and is less than 2.53, the sensing responder B may select the CIR tap B2 and the CIR tap B3 to generate the CIR measurement report, and feed back the CIR measurement report to the sensing initiator.

In another possible implementation, the third parameter indicates that the configuration of the noise threshold is: When the bitmap mode indicated by the fifth parameter is feeding back the CIR tap based on the preset feedback pattern, the second communication apparatus (for example, the sensing responder) does not compare the amplitude of the detected CIR tap with the amplitude of the noise threshold, but includes the plurality of detected CIR taps in the CIR measurement report. Optionally, the field value corresponding to the third parameter may alternatively be set to null, to indicate that the amplitude of the noise threshold is not configured. In other words, the second communication apparatus (for example, the sensing responder) only needs to include all the plurality of detected CIR taps in the CIR measurement report and feed back the CIR measurement report to the first communication apparatus (for example, the sensing initiator).

For example, the third parameter is the noise threshold Threshold subfield, the fifth parameter is the Bitmap mode subfield, the first communication apparatus is the sensing initiator, and the second communication apparatus is the sensing responder. The Threshold subfield indicates that the configuration of the noise threshold is: When the bitmap mode indicated by the Bitmap mode subfield is feeding back the CIR tap based on the preset feedback pattern, the sensing responder does not compare the amplitude of the detected CIR tap with the amplitude of the noise threshold, but may include the plurality of detected CIR taps in the CIR measurement report and feed back the CIR measurement report to the sensing initiator.

Optionally, any two or more of Manner 1, Manner 2, and Manner 3 may be used in combination.

It can be learned from step 301 and step 302 that at least one of the first parameter, the second parameter, or the third parameter is added to the first information, to support flexible configuration of a sensing control parameter, and help flexibly feed back the CIR measurement report. This can meet requirements of different application scenarios. When the first information includes the first parameter, the feedback manner of the CIR measurement report may be flexibly configured, to support a sensing report feedback and sensing parameter configuration by using an out-of-band narrowband system. When the first information includes the second parameter, the reference CIR tap may be flexibly configured, to support configuration of different reference CIR taps. When the first information includes the third parameter, the noise threshold may be flexibly configured, to support configuration of different noise thresholds.

It should be noted that in descriptions of this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first", "second", and "third" in embodiments of this application are used to distinguish between a plurality of objects, and are not used to limit a sequence, a time sequence, priorities, or importance degrees of the plurality of objects. In addition, the terms "include", "comprise", "have", and variations thereof that appear in this application all mean "including but not limited to", unless otherwise specifically emphasized in another manner.

In addition, it should be noted that each step in the foregoing embodiments may be performed by a corresponding device, or may be performed by a component like a chip, a processor, or a chip system in the device. This is not limited in embodiments of this application. The foregoing embodiments are described only by using an example in which each step is performed by the corresponding device.

It should be noted that in the foregoing embodiments, a part of steps may be selected for implementation, or a sequence of steps in the figure may be adjusted for implementation. This is not limited in this application. It should be understood that performing a part of steps in the figure, adjusting a sequence of steps, or combining the two manners for specific implementation shall fall within the protection scope of this application.

It may be understood that, to implement functions in the foregoing embodiments, devices in the foregoing embodiments include corresponding hardware structures and/or software modules for performing the functions. A person skilled in the art should be easily aware that, with reference to units and method steps in the examples described in embodiments disclosed in this application, this application can be implemented by hardware or a combination of hardware and computer software. Whether a function is performed through hardware or hardware driven by computer software depends on particular application scenarios and design constraint conditions of the technical solutions.

It should be noted that the "step" in embodiments of this application is merely an example, is a representation method used to better understand embodiments, and does not constitute a substantive limitation on execution of the solutions in this application. For example, the "step" may also be understood as a "feature". In addition, the step does not constitute any limitation on an execution sequence of the solutions in this application, and a new technical solution formed through an operation, for example, step sequence change, step combination, or step splitting, performed on this basis without affecting implementation of the overall solutions also falls within the scope disclosed in this application.

Based on a same concept, an embodiment of this application further provides a possible communication apparatus. The communication apparatus is applicable to the architecture of the communication system shown in FIG. 1a or FIG. 1b. Optionally, the communication apparatus may be a communication device (for example, a first communication apparatus or a second communication apparatus) or a component (for example, a chip, a chip system, a processor, or a circuit) that can support the communication device in implementing a function required by a communication method. For example, when the communication apparatus is the first communication apparatus (for example, a sensing initiator), the communication apparatus is configured to implement the technical solution related to the sensing initiator in the foregoing embodiments, or a module (for example, a chip) of the communication apparatus is configured to implement the technical solution related to the sensing initiator in the foregoing embodiments. Therefore, beneficial effect of the sensing initiator in the foregoing embodiments can also be implemented. For example, the communication apparatus is a chip disposed in the sensing initiator. When the communication apparatus is the chip, the communication apparatus includes a transceiver and a processor, and does not include a memory. The transceiver exists as an input/output interface, and the input/output interface is used by the chip to implement receiving/sending of the sensing initiator. The input/output interface may include an input interface and/or an output interface. The input interface may implement receiving of the sensing initiator, and the output interface may be configured to implement sending of the sensing initiator. The processor is configured to read and execute a corresponding computer program or instructions, so that a corresponding function of the sensing initiator is implemented. Optionally, when the chip implements the corresponding function of the sensing initiator in the foregoing embodiments, the input/output interface may implement receiving/sending operations performed by the sensing initiator in the foregoing embodiments, and the processor may implement another operation other than the receiving/sending operations performed by the sensing initiator in the foregoing embodiments. For specific related descriptions, refer to related descriptions of the sensing initiator in the method embodiment shown in FIG. 3. Details are not described herein again.

For another example, when the communication apparatus is the second communication apparatus (for example, a sensing responder), the communication apparatus is configured to implement the technical solution related to the sensing responder in the foregoing embodiments, or a module (for example, a chip) of the communication apparatus is configured to implement the technical solution related to the sensing responder in the foregoing embodiments. Therefore, beneficial effect of the sensing responder in the foregoing embodiments can also be implemented. For example, the communication apparatus is a chip disposed in the sensing responder. When the communication apparatus is the chip, the communication apparatus includes a transceiver and a processor, and does not include a memory. The transceiver exists as an input/output interface, and the input/output interface is used by the chip to implement receiving/sending of the sensing responder. The input/output interface may include an input interface and/or an output interface. The input interface may implement receiving of the sensing responder, and the output interface may be configured to implement sending of the sensing responder. The processor is configured to read and execute a corresponding computer program or instructions, so that a corresponding function of the sensing responder is implemented. Optionally, when the chip implements the corresponding function of the sensing responder in the foregoing embodiments, the input/output interface may implement receiving/sending operations performed by the sensing responder in the foregoing embodiments, and the processor may implement another operation other than the receiving/sending operations performed by the sensing responder in the foregoing embodiments. For specific related descriptions, refer to related descriptions of the sensing responder in the method embodiment shown in FIG. 3. Details are not described herein again.

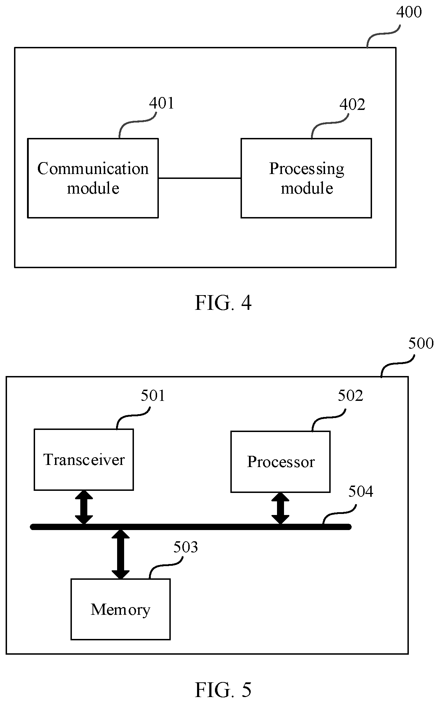

Refer to FIG. 4. A communication apparatus 400 includes a communication module 401 (or may be referred to as a transceiver module, configured to send and receive data) and a processing module 402. The communication apparatus 400 may be configured to implement the functions of the sensing initiator or the sensing responder in the method embodiment shown in FIG. 3.

Optionally, the communication module 401 may include a receiving module and/or a sending module. The receiving module may be used by the communication apparatus 400 to receive a signal (information, data, or the like), and the sending module may be used by the communication apparatus 400 to send a signal (information, data, or the like). The sending module may send a signal (information, data, or the like) under control of the processing module 402, and the receiving module may receive a signal (information, data, or the like) under control of the processing module 402.

When the communication apparatus 400 is configured to implement the functions of the sensing initiator in the method embodiment shown in FIG. 3, the communication module 401 is configured to send first information to the sensing responder. The first information includes at least one of the following: a first parameter, a second parameter, or a third parameter. The first parameter indicates a feedback manner of a CIR measurement report, the second parameter indicates a reference CIR tap, and the third parameter indicates configuration of a noise threshold. The processing module 402 is configured to perform corresponding data processing.

When the communication apparatus 400 is configured to implement the functions of the sensing responder in the method embodiment shown in FIG. 3, the communication module 401 is configured to receive the first information from the sensing initiator. The first information includes at least one of the following: the first parameter, the second parameter, or the third parameter. The first parameter indicates the feedback manner of the CIR measurement report, the second parameter indicates the reference CIR tap, and the third parameter indicates the configuration of the noise threshold. The processing module 402 is configured to perform corresponding data processing.

When the communication apparatus 400 is configured to implement the functions of the sensing initiator or the sensing responder in the method embodiment shown in FIG. 3, for more detailed descriptions of the communication module 401 and the processing module 402, refer to related descriptions of the sensing initiator or the sensing responder in the method embodiment shown in FIG. 3. Details are not described herein again.

It should be understood that in this embodiment of this application, the communication module 401 may be implemented by a transceiver or a transceiver-related circuit component, and the processing module 402 may be implemented by a processor or a processor-related circuit component.

It should be noted that division into the modules in embodiments of this application is an example, and is merely logical function division. During actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

Based on a same concept, an embodiment of this application further provides a possible communication apparatus. The communication apparatus is applicable to the architecture of the communication system shown in FIG. 1a or FIG. 1b. For example, the communication apparatus may be an apparatus (for example, a first communication apparatus or a second communication apparatus) needed for performing the communication method provided in embodiments of this application, or may be a device including the apparatus required for performing the communication method provided in embodiments of this application. Optionally, the communication apparatus may be a chip disposed in the first communication apparatus (for example, a sensing initiator) or the second communication apparatus (for example, a sensing responder). When the communication apparatus is the chip disposed in the sensing initiator or the sensing responder, the communication apparatus includes a transceiver and a processor, and does not include a memory. The transceiver exists as an input/output interface, and the input/output interface is used by the chip to implement receiving/sending of the communication apparatus. The input/output interface may include an input interface and/or an output interface. The input interface may implement receiving of the communication apparatus, and the output interface may be configured to implement sending of the communication apparatus. The processor is configured to read and execute a corresponding computer program or instructions, so that a corresponding function of the sensing initiator or the sensing responder is implemented. Optionally, when the chip implements the corresponding function of the sensing initiator (or the sensing responder) in the foregoing embodiments, the input/output interface may implement receiving/sending operations performed by the sensing initiator (or the sensing responder) in the foregoing embodiments, and the processor may implement another operation other than the receiving/sending operations performed by the sensing initiator (or the sensing responder) in the foregoing embodiments. Specifically, for related specific descriptions, refer to related descriptions in the foregoing embodiments. Details are not described herein again. For example, the communication apparatus is a sensing initiator or a sensing responder. When the communication apparatus is configured to implement the technical solution related to the sensing initiator in the foregoing embodiments, the communication apparatus can also implement beneficial effect of the sensing initiator in the foregoing method embodiments. When the communication apparatus is configured to implement the technical solution related to the sensing responder in the foregoing embodiments, the communication apparatus can also implement beneficial effect of the sensing responder in the foregoing method embodiments.

Refer to FIG. 5. A communication apparatus 500 includes a transceiver 501 and a processor 502. Optionally, the communication apparatus 500 further includes a memory 503. The transceiver 501, the processor 502, and the memory 503 are connected to each other. When the communication apparatus 500 is configured to implement the technical solution related to the sensing initiator in the foregoing embodiments, the transceiver 501 may be configured to implement a function of the communication module 401 when the communication module 401 performs the technical solution related to the sensing initiator, and the processor 502 is configured to implement a function of the processing module 402 when the processing module 402 performs the technical solution related to the sensing initiator. When the communication apparatus 500 is configured to implement the technical solution related to the sensing responder in the foregoing embodiments, the transceiver 501 may be configured to implement a function of the communication module 401 when the communication module 401 performs the technical solution related to the sensing responder, and the processor 502 is configured to implement a function of the processing module 402 when the processing module 402 performs the technical solution related to the sensing responder.

Optionally, the transceiver 501, the processor 502, and the memory 503 are connected to each other through a bus 504. The bus 504 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used for representation in FIG. 5, but this does not mean that there is only one bus or only one type of bus.

The transceiver 501 is configured to receive and send data. For example, when the communication apparatus 500 is a device in the architecture of the communication system shown in FIG. 1a or FIG. 1b, the transceiver 501 communicates with any device other than the device in the architecture of the communication system shown in FIG. 1a or FIG. 1b, or may communicate with a device (for example, a vehicle-mounted device or a server) other than the architecture of the communication system shown in FIG. 1a or FIG. 1b. For example, the transceiver may be a transceiver apparatus integrated with data receiving/sending functions. For another example, the transceiver may alternatively include a transmitter and a receiver. The transmitter is configured to send data, and the receiver is configured to receive data.

Optionally, the transceiver 501 may include a transmitter and/or a receiver. The transmitter is configured to send a signal, a message, information, data, or the like. The receiver is configured to receive a signal, a message, information, data, or the like. For example, the transmitter sends a signal, a message, information, data, or the like under control of the processor 502. The receiver receives a signal, a message, information, data, or the like under control of the processor 502.

For a function of the processor 502, refer to descriptions of the corresponding function of the sensing initiator or the sensing responder in the foregoing embodiments. Details are not described herein again. The processor 502 may be a central processing unit (central processing unit, CPU), a network processor (network processor, NP), a combination of the CPU and the NP, or the like. The processor 502 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof. The processor 502 may implement the functions by hardware or certainly by hardware executing corresponding software.

The memory 503 is configured to store program instructions and the like. Specifically, the program instructions may include program code. The program code includes computer operation instructions. The memory 503 may include a random access memory (random access memory, RAM), or may further include a non-volatile memory (non-volatile memory), for example, at least one magnetic disk memory. The processor 502 executes the program instructions stored in the memory 503, to implement the foregoing functions, so as to implement the method steps that need to be performed by the sensing initiator or the sensing responder in the foregoing embodiments.

Based on a same concept, an embodiment of this application further provides a possible communication system. The communication system includes a first communication apparatus and a second communication apparatus. The first communication apparatus (for example, a sensing initiator or a sensing transmitter) may be configured to implement the technical solution related to the sensing initiator in the foregoing embodiments, and the second communication apparatus (for example, a sensing responder or a sensing receiver) may be configured to implement the technical solution related to the sensing responder in the foregoing embodiments.

Based on a same concept, an embodiment of this application further provides a computer program product. The computer program product includes a computer program or instructions. When the computer program or the instructions are run on a computer, the computer is enabled to perform the method provided in the foregoing embodiments.

Based on a same concept, an embodiment of this application further provides a computer-readable storage medium. The computer-readable storage medium stores a computer program or instructions. When the computer program or the instructions are executed by a computer, the computer is enabled to perform the method provided in the foregoing embodiments.

The storage medium may be any usable medium that can be accessed by the computer. By way of example rather than limitation, the computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on a same concept, an embodiment of this application further provides a chip. The chip is coupled to a memory, and the chip is configured to read a computer program stored in the memory, to implement the method provided in the foregoing embodiments.

Based on a same concept, an embodiment of this application further provides a chip system. The chip system includes a processor, configured to support a computer apparatus in implementing a function related to the sensing initiator or the sensing responder in the foregoing embodiments. In a possible design, the chip system further includes a memory, and the memory is configured to store a program and data that are necessary for the computer apparatus. The chip system may include a chip, or may include a chip and another discrete component.

All or some of the foregoing methods in the embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The steps of the method described in embodiments of this application may be directly embedded into hardware, a software unit executed by a processor, or a combination thereof. The software unit may be stored in a RAM, a ROM, an EEPROM, a register, a hard disk drive, a removable magnetic disk, a CD-ROM, or a storage medium of any other form in the art. For example, the storage medium may be connected to the processor, so that the processor may read information from the storage medium and write information into the storage medium. Optionally, the storage medium may alternatively be integrated into the processor. The processor and the storage medium may be disposed in an ASIC.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and the scope of this application. If these modifications and variations made to this application fall within the scope of the claims of this application and equivalent technologies thereof, this application is also intended to cover these modifications and variations.

**Claims**

1. A communication method, applied to a first communication apparatus, wherein the method comprises:

   sending first information to a second communication apparatus, wherein the first information comprises at least one of the following: a first parameter, a second parameter, or a third parameter, wherein
   the first parameter indicates a feedback manner of a channel impulse response CIR measurement report, the second parameter indicates a reference CIR tap, and the third parameter indicates configuration of a noise threshold.

2. The method according to claim 1, wherein when the first information comprises the first parameter, the first parameter indicates that the feedback manner of the CIR measurement report is feeding back the CIR measurement report on an ultra-wideband UWB frequency band or feeding back the CIR measurement report by using an out-of-UWB narrowband system.

3. The method according to claim 1 or 2, wherein when the first information comprises the second parameter, the second parameter indicates one of the following as the reference CIR tap: a first CIR tap, a second CIR tap, or a third CIR tap;

the first CIR tap is a CIR tap corresponding to **an earliest arriving path;**
when there is one strongest path, the second CIR tap is a CIR tap corresponding to the strongest path; or when there are a plurality of equal strongest paths, the second CIR tap is a CIR tap corresponding to a first strongest arriving path and that is in the plurality of equal strongest paths; and
the third CIR tap is any one of CIR taps other than the first CIR tap and the second CIR tap.

4.  The method according to claim 3, wherein the first information further comprises a fourth parameter;

    when the second parameter indicates that the first CIR tap is used as the reference CIR tap, the fourth parameter indicates a first offset of a 1st CIR tap in a CIR window relative to the first CIR tap, and the first offset is an integer greater than or equal to 0;
    when the second parameter indicates that the second CIR tap is used as the reference CIR tap, the fourth parameter indicates a second offset of the 1st CIR tap in the CIR window relative to the second CIR tap, and the second offset is an integer greater than or equal to 0 or the second offset is an integer less than 0; and
    when the second parameter indicates that the third CIR tap is used as the reference CIR tap, the fourth parameter indicates a third offset of the 1st CIR tap in the CIR window relative to the third CIR tap, and the third offset is an integer greater than 0 or less than 0.

5.  The method according to any one of claims 1 to 4, wherein the first information further comprises a fifth parameter, and a bitmap mode indicated by the fifth parameter is feeding back the CIR tap based on a customized feedback pattern or feeding back the CIR tap based on a preset feedback pattern.

6.  The method according to claim 5, wherein the configuration, of the noise threshold, indicated by the third parameter is: when the bitmap mode indicated by the fifth parameter is feeding back the CIR tap based on the customized feedback pattern, determining an amplitude of the noise threshold based on an amplitude of a CIR tap corresponding to a detected strongest path and a ratio comprised in the configuration, wherein the ratio indicates a ratio of the amplitude of the CIR tap corresponding to the strongest path to the amplitude of the noise threshold; and
    a CIR tap whose amplitude is greater than or equal to the amplitude of the noise threshold is comprised in the CIR measurement report.

7.  The method according to claim 6, wherein the amplitude of the noise threshold meets the following form:

$$S = T \times 10^{\left(-\frac{Q}{20}\right)},$$

    wherein
    S indicates the amplitude of the noise threshold, T indicates the amplitude of the CIR tap corresponding to the strongest path detected by the second communication apparatus, and Q indicates the ratio.

8.  A communication method, applied to a second communication apparatus, wherein the method comprises:

    receiving first information from a first communication apparatus, wherein the first information comprises at least one of the following: a first parameter, a second parameter, or a third parameter, wherein
    the first parameter indicates a feedback manner of a channel impulse response CIR measurement report, the second parameter indicates a reference CIR tap, and the third parameter indicates configuration of a noise threshold.

9.  The method according to claim 8, wherein when the first information comprises the first parameter, the first parameter indicates that the feedback manner of the CIR measurement report is feeding back the CIR measurement report on a UWB frequency band or feeding back the CIR measurement report by using an out-of-UWB narrowband system.

10. The method according to claim 8 or 9, wherein when the first information comprises the second parameter, the second parameter indicates one of the following as the reference CIR tap: a first CIR tap, a second CIR tap, or a third CIR tap; and
    the first CIR tap is a CIR tap corresponding to an earliest arriving path; when there is one strongest path, the second CIR tap is a CIR tap corresponding to the strongest path; or when there are a plurality of equal strongest paths, the second CIR tap is a CIR tap corresponding to a first strongest arriving path and that is in the plurality of equal strongest paths; and the third CIR tap is any one of CIR taps other than the first CIR tap and the second CIR tap.

11. The method according to claim 10, wherein the first information further comprises a fourth parameter; wherein when the second parameter indicates that the first CIR tap is used as the reference CIR tap, the fourth parameter indicates a first offset of a 1st CIR tap in a CIR window relative to the first CIR tap, and the first offset is an integer greater than or equal to 0; when the second parameter indicates that the second CIR tap is used as the reference CIR tap, the fourth parameter indicates a second offset of the 1st CIR tap in the CIR window relative to the second CIR tap, and the second offset is an integer greater than or equal to 0 or the second offset is an integer less than 0; and when the second parameter indicates that the third CIR tap is used as the reference CIR tap, the fourth parameter indicates a third offset of the 1st CIR tap in the CIR window relative to the third CIR tap, and the third offset is an integer greater than 0 or less than 0.

12. The method according to any one of claims 8 to 11, wherein the first information further comprises a fifth parameter, and a bitmap mode indicated by the fifth parameter is feeding back the CIR tap based on a customized feedback pattern or feeding back the CIR tap based on a preset feedback pattern.

13. The method according to claim 12, wherein the configuration, of the noise threshold, indicated by the third parameter is: when the bitmap mode indicated by the fifth parameter is feeding back the CIR tap based on the customized feedback pattern, determining an amplitude of the noise threshold based on an amplitude of a CIR tap corresponding to a detected strongest path and a ratio comprised in the configuration, wherein the ratio indicates a ratio of the amplitude of the CIR tap corresponding to the strongest path to the amplitude of the noise threshold; and a CIR tap whose amplitude is greater than or equal to the amplitude of the noise threshold is comprised in the CIR measurement report.

14. The method according to claim 13, wherein the amplitude of the noise threshold meets the following form:

$$S = T \times 10^{\left(-\frac{Q}{20}\right)},$$

wherein
S indicates the amplitude of the noise threshold, T indicates the amplitude of the CIR tap corresponding to the strongest path detected by the second communication apparatus, and Q indicates the ratio.

15. A communication apparatus, used in a first communication apparatus, wherein the apparatus comprises:

a communication module, configured to send first information to a second communication apparatus, wherein the first information comprises at least one of the following: a first parameter, a second parameter, or a third parameter, wherein
the first parameter indicates a feedback manner of a channel impulse response CIR measurement report, the second parameter indicates a reference CIR tap, and the third parameter indicates configuration of a noise threshold.

16. A communication apparatus, used in a second communication apparatus, wherein the apparatus comprises:

a communication module, configured to receive first information from a first communication apparatus, wherein the first information comprises at least one of the following: a first parameter, a second parameter, or a third parameter, wherein
the first parameter indicates a feedback manner of a channel impulse response CIR measurement report, the second parameter indicates a reference CIR tap, and the third parameter indicates configuration of a noise threshold.

17. The apparatus according to claim 15 or 16, wherein when the first information comprises the first parameter, the first parameter indicates that the feedback manner of the CIR measurement report is feeding back the CIR measurement report on an ultra-wideband UWB frequency band or feeding back the CIR measurement report by using an out-of-UWB narrowband system.

18. The apparatus according to any one of claims 15 to 17, wherein when the first information comprises the second parameter, the second parameter indicates one of the following as the reference CIR tap: a first CIR tap, a second CIR tap, or a third CIR tap; and
the first CIR tap is a CIR tap corresponding to an earliest arriving path; when there is one strongest path, the second CIR tap is a CIR tap corresponding to the strongest path; or when there are a plurality of equal strongest paths, the second CIR tap is a CIR tap corresponding to a first strongest arriving path and that is in the plurality of equal strongest paths; and the third CIR tap is any one of CIR taps other than the first CIR tap and the second CIR tap.

19. The apparatus according to claim 18, wherein the first information further comprises a fourth parameter; when the second parameter indicates that the first CIR tap is used as the reference CIR tap, the fourth parameter indicates a first offset of a 1st CIR tap in a CIR window relative to the first CIR tap, and the first offset is an integer greater than or equal to 0; when the second parameter indicates that the second CIR tap is used as the reference CIR tap, the fourth parameter indicates a second offset of the 1st CIR tap in the CIR window relative to the second CIR tap, and the second offset is an integer greater than or equal to 0 or the second offset is an integer less than 0; and when the second parameter indicates that the third CIR tap is used as the reference CIR tap, the fourth parameter indicates a third offset of the 1st CIR tap in the CIR window relative to the third CIR tap, and the third offset is an integer greater than 0 or less than 0.

20. The apparatus according to any one of claims 15 to 19, wherein the first information further comprises a fifth parameter, and a bitmap mode indicated by the fifth parameter is feeding back the CIR tap based on a customized feedback pattern or feeding back the CIR tap based on a preset feedback pattern.

21. The apparatus according to claim 20, wherein the configuration, of the noise threshold, indicated by the third parameter is: when the bitmap mode indicated by the fifth parameter is feeding back the CIR tap based on the customized feedback pattern, determining an amplitude of the noise threshold based on an amplitude of a CIR tap corresponding to a detected strongest path and a ratio comprised in the configuration, wherein the ratio indicates a ratio of the amplitude of the CIR tap corresponding to the strongest path to the amplitude of the noise threshold; and a CIR tap whose amplitude is greater than or equal to the amplitude of the noise threshold is comprised in the CIR measurement report.

22. The apparatus according to claim 21, wherein the amplitude of the noise threshold meets the following form:

$$ S = T \times 10^{\left(-\frac{Q}{20}\right)}, $$

wherein
S indicates the amplitude of the noise threshold, T indicates the amplitude of the CIR tap corresponding to the strongest path detected by the second communication apparatus, and Q indicates the ratio.

23. A communication apparatus, comprising:

   a transceiver, configured to receive and send data;
   a memory, configured to store computer program instructions and data; and
   a processor, configured to invoke and execute the computer program instructions and the data in the memory, to enable the communication apparatus to perform the method according to any one of claims 1 to 7 or the method according to any one of claims 8 to 14.

24. A communication system, comprising a first communication apparatus configured to perform the method according to any one of claims 1 to 7 and a second communication apparatus configured to perform the method according to any one of claims 8 to 14.

25. A computer-readable storage medium, wherein the computer-readable storage medium stores a computer program or instructions, and when the computer program or the instructions are executed by a computer, the computer is enabled to perform the method according to any one of claims 1 to 7 or the method according to any one of claims 8 to 14.

26. A computer program product, wherein the computer program product comprises a computer program or instructions, and when the computer program or the instructions are run on a computer, the computer is enabled to perform the method according to any one of claims 1 to 7 or the method according to any one of claims 8 to 14.

27. A chip, wherein the chip comprises a processor, and the chip is configured to execute program instructions in a memory, to perform the method according to any one of claims 1 to 7 or the method according to any one of claims 8 to 14.

PAN
coordinator or
coordinator

FFD

RFD

Information flow
or data flow

FIG. 1a

PAN coordinator
or coordinator

FFD

RFD

Information flow
or data flow

FIG. 1b

$t_0$

$t_0+W_{offset}$

$t_0+W_{offset}+W_{length}$

Noise threshold

$BM_{offset}$

$BM_{length}$

FIG. 2

Sensing initiator

Sensing responder

301: Send first information

302

Receive the first information

FIG. 3

400

```
┌─────────────────────────────────────────────────────┐
│                                                       │
│          401                        402               │
│                                                       │
│   ┌──────────────┐          ┌──────────────┐          │
│   │Communication │          │  Processing  │          │
│   │   module     │──────────│    module    │          │
│   │              │          │              │          │
│   └──────────────┘          └──────────────┘          │
│                                                       │
└─────────────────────────────────────────────────────┘
```

FIG. 4

500

```
┌──────────────────────────────────────────────────────┐
│                                                        │
│        501                        502                  │
│                                                        │
│   ┌──────────────┐          ┌──────────────┐           │
│   │ Transceiver  │          │  Processor   │           │
│   │              │          │              │    504    │
│   └──────────────┘          └──────────────┘           │
│          ▲                         ▲                   │
│          ▼                         ▼                   │
│ ═════════════════════════════════════════════════     │
│          ▲                                             │
│          ▼        503                                  │
│   ┌──────────────┐                                     │
│   │   Memory     │                                     │
│   │              │                                     │
│   └──────────────┘                                     │
│                                                        │
└──────────────────────────────────────────────────────┘
```

FIG. 5

## INTERNATIONAL SEARCH REPORT

| International application No. |
| --- |
| **PCT/CN2024/116652** |

### A.    CLASSIFICATION OF SUBJECT MATTER

H04W 24/10(2009.01)i；  H04L5/00(2006.01)i

According to International Patent Classification (IPC) or to both national classification and IPC

### B.    FIELDS SEARCHED

Minimum documentation searched (classification system followed by classification symbols)

IPC:H04W24/-；  H04L5/-

Documentation searched other than minimum documentation to the extent that such documents are included in the fields searched

Electronic data base consulted during the international search (name of data base and, where practicable, search terms used)

CNTXT: CNABS; CNKI: 信道脉冲响应, 信道冲击响应, 信道冲激响应, CIR, 反馈, 报告, 超宽带, UWB, 感知, 分支, 径, 抽头, tap, 选择, 指示, 最早, 最强, 参考, 门限; VEN; USTXT; EPTXT; WOTXT; 3GPP: channel impulse response, CIR, feedback, report, UWB, sensing, tap, path, select, indicate, first, earliest, strongest, reference, threshold

### C.    DOCUMENTS CONSIDERED TO BE RELEVANT

| Category* | Citation of document, with indication, where appropriate, of the relevant passages | Relevant to claim No. |
| --- | --- | --- |
| PX | WO 2023202546 A1 (HUAWEI TECHNOLOGIES CO., LTD.) 26 October 2023 (2023-10-26)<br>    description, paragraphs [0092]-[0210] | 1-27 |
| PX | WO 2023169264 A1 (HUAWEI TECHNOLOGIES CO., LTD.) 14 September 2023 (2023-09-14)<br>    description, paragraphs [0081]-[0170] | 1-27 |
| X | WO 2023140965 A1 (QUALCOMM INC.) 27 July 2023 (2023-07-27)<br>    description, paragraphs [0014]-[0017] and [0037]-[0124] | 1-27 |
| X | CN 115243307 A (CHENGDU XGIMI TECHNOLOGY CO., LTD.) 25 October 2022 (2022-10-25)<br>    description, paragraphs [0061]-[0072] | 1-2, 8-9, 15-17, 23-27 |
| A | WO 2019138156 A1 (NOKIA TECHNOLOGIES OY) 18 July 2019 (2019-07-18)<br>    entire document | 1-27 |
| A | CN 112350809 A (HUAWEI TECHNOLOGIES CO., LTD.) 09 February 2021 (2021-02-09)<br>    entire document | 1-27 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 November 2024** | **06 November 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/116652**

| Patent document cited in search report | | | Publication date (day/month/year) | Patent family member(s) | | | Publication date (day/month/year) |
|---|---|---|---|---|---|---|---|
| WO | 2023202546 | A1 | 26 October 2023 | CN | 116916366 | A | 20 October 2023 |
| WO | 2023169264 | A1 | 14 September 2023 | CN | 116781104 | A | 19 September 2023 |
| WO | 2023140965 | A1 | 27 July 2023 | TW | 202345553 | A | 16 November 2023 |
| | | | | KR | 20240134874 | A | 10 September 2024 |
| | | | | IN | 202447036158 | A | 17 May 2024 |
| CN | 115243307 | A | 25 October 2022 | None | | | |
| WO | 2019138156 | A1 | 18 July 2019 | EP | 3738281 | A1 | 18 November 2020 |
| | | | | EP | 3738281 | A4 | 13 October 2021 |
| | | | | EP | 3738281 | B1 | 03 January 2024 |
| CN | 112350809 | A | 09 February 2021 | WO | 2021023093 | A1 | 11 February 2021 |
| | | | | US | 2022159426 | A1 | 19 May 2022 |
| | | | | CN | 112350809 | B | 08 December 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311150468